(19) **Europäisches Patentamt**

**European Patent Office**

**Office européen des brevets**

(11) **EP 0 970 822 B1**

(12) **EUROPÄISCHE PATENTSCHRIFT**

(45) Veröffentlichungstag und Bekanntmachung des Hinweises auf die Patenterteilung:
**12.01.2005 Patentblatt 2005/02**

(51) Int Cl.7: **B60C 11/00**
// B60C113:00

(21) Anmeldenummer: **99111756.5**

(22) Anmeldetag: **18.06.1999**

(54) **Fahrzeugluftreifen**

Vehicle tyre

Bandage pneumatique pour véhicule

(84) Benannte Vertragsstaaten:
**DE FR GB IT**

(30) Priorität: **08.07.1998 DE 19830469**

(43) Veröffentlichungstag der Anmeldung:
**12.01.2000 Patentblatt 2000/02**

(73) Patentinhaber: **Continental Aktiengesellschaft
30165 Hannover (DE)**

(72) Erfinder: **Baumhöfer, Johannes Josef
30900 Wedemark (DE)**

(56) Entgegenhaltungen:
**EP-A- 0 454 658        EP-A- 0 475 929
EP-A- 0 627 332        EP-A- 0 882 605
US-A- 1 956 011**

- **PATENT ABSTRACTS OF JAPAN vol. 007, no. 177 (M-233), 5. August 1983 (1983-08-05) -& JP 58 078801 A (TOYO GOMU KOGYO KK), 12. Mai 1983 (1983-05-12)**
- **PATENT ABSTRACTS OF JAPAN vol. 1997, no. 09, 30. September 1997 (1997-09-30) -& JP 09 123709 A (YOKOHAMA RUBBER CO LTD:THE), 13. Mai 1997 (1997-05-13)**
- **PATENT ABSTRACTS OF JAPAN vol. 017, no. 139 (M-1385), 22. März 1993 (1993-03-22) -& JP 04 317805 A (BRIDGESTONE CORP), 9. November 1992 (1992-11-09)**

**Beschreibung**

Die Erfindung betrifft einen Fahrzeugluftreifen, insbesondere einen Radialreifen für Personenkraftwagen, mit einem Laufstreifenprofil, welches sich aus Profilelementen zusammensetzt, die zumindest eine Schulterblockreihe und eine dieser benachbart verlaufende mittlere Blockreihe umfassen, deren Blöcke in Umfangsrichtung durch Quernuten voneinander getrennt sind, wobei die über den Reifenumfang vorliegende Gesamtanzahl der Blöcke der Schulterblockreihe ein ganzzahliges Vielfaches der Gesamtanzahl der in der benachbarten mittleren Blockreihe verlaufenden Blöcke ist, wobei zumindest die Schulterblockreihe und die mittlere Blockreihe gemäß einer Pitchfolge geräuschoptimiert sind, die mindestens zwei Pitches unterschiedlicher Länge umfasst und von der Schulterblockreihe ausgehend angewandt ist, wobei jedes Pitch in der Schulterblockreihe einen Block und eine Quernut umfasst.

Fahrzeugluftreifen mit Laufstreifenprofilen, die eine mittlere Blockreihe aufweisen, deren in Umfangsrichtung gemessene Anzahl der Blöcke beispielsweise die Hälfte der Gesamtanzahl der in der benachbarten Schulterblockreihe angeordneten Blöcke beträgt, sind an sich bekannt, beispielsweise aus der EP-A-0 627 332, die einen Reifen der eingangs genannten Art betrifft. Diese bekannte Ausgestaltung wirkt sich günstig auf die Profilsteifigkeit im Laufstreifenmittelbereich aus, da aufgrund der in Umfangsrichtung wesentlich längeren Blöcke hier eine Profilsteifigkeit vorliegt, die für eine Reihe von Reifeneigenschaften von Vorteil ist, beispielsweise für das Fahrverhalten des Reifens, insbesondere dessen Geradeauslaufstabilität und dessen promptes Ansprechen auf Lenkkräfte.

Bei der Auslegung von Laufstreifenprofilen für Reifen ist es schon seit langem üblich, zur Verminderung des Reifen/Fahrbahngeräusches bzw. des Abrollgeräusches den über den Reifenumfang aufeinander folgenden gleichartigen Profilabschnitten, den Pitches, unterschiedliche Umfangslängen zuzuordnen. Dabei werden üblicherweise zwischen drei und fünf unterschiedliche Umfangslängen für die Profilabschnitte gewählt, deren maximales Längenverhältnis zueinander ebenfalls vorab festgelegt wird, wobei mittels geeigneter Rechenprogramme die günstigste Aufeinanderfolge der Pitches über den Reifenumfang, die günstigste Pitchfolge, ermittelt wird. Je nach Profilausgestaltung oder auch Einsatzzweck des Fahrzeugreifens ist es dabei auch durchaus üblich, bei ein und demselben Reifen in unterschiedlichen Laufstreifenbereichen unterschiedliche Pitchfolgen, gegebenenfalls auch in Kombination mit unterschiedlichen Pitchlängenverhältnissen, vorzusehen.

Auch in der Patentliteratur ist zum Thema Pitchfolgen eine Vielzahl von Lösungsvorschlägen aufzufinden. So ist es beispielsweise aus der EP 0 475 929 A1 bekannt, ein Laufflächenprofil so zu gestalten, dass es aus fünf Reihen aus in Umfangsrichtung aufeinander folgenden, innerhalb jeder Reihe jeweils gleichartigen Profilschritten besteht, wobei die Profilschritte in den Schulterreihen mindestens zwei unterschiedliche Basislängen aufweisen. Zur Laufflächenmitte zu wird die Anzahl der in den einzelnen Reihen den Basislängen der Schulterreihen zugeordneten Profilabschnitte schrittweise größer.

Die EP 0 454 658 B1 befasst sich mit einem Laufstreifenprofil, bei welchem sich zumindest ein Umfangsbereich, der durch Quernuten gegliedert ist, aus einer Abfolge von gleichartigen Basispitches zusammensetzt, wobei den Basispitches Nutpitches unterschiedlicher Längen zugeordnet sind, deren Anzahl kleiner ist als die Anzahl der unterschiedlichen Basispitchlängen.

Aus der DE 34 45 041 A1 ist es ferner bekannt, im Bereich der Laufflächenprofilränder die Umfangslängenänderungen aufeinander folgender Profilelemente kleiner zu halten als im Vergleich zu den im Laufflächenmittelbereich befindlichen Profilelementen.

Bei Laufstreifenprofilen, die im Laufstreifenmittelbereich Profilbereiche besitzen oder sich aus solchen Profilbereichen zusammensetzen, die, wie eingangs ausgeführt, in Umfangsrichtung relativ lange Blöcke aufweisen, haben diese Blöcke infolge der gewählten Pitchfolge oft derart große Längenverhältnisse zueinander, dass deren Steifigkeit so unterschiedlich wird, dass in diesem Bereich ein ungleichmäßiger Abrieb auftritt. Ein ungleichmäßiger Abrieb verkürzt nicht nur die Lebensdauer eines Reifens, sondern hat auch ungünstige Auswirkungen auf das Reifen/Fahrbahngeräusch.

Hier setzt nun die Erfindung ein, deren Aufgabe darin besteht, ein Laufstreifenprofil der eingangs genannten Art so zu verbessern, dass ein gleichmäßigeres Abriebsbild entsteht und damit auch gleichzeitig Geräusch- und Abrollkomfort erhöht werden.

Gelöst wird die gestellte Aufgabe erfindungsgemäß dadurch, dass die Pitchgrenzen durch die Blöcke der Blockreihen verlaufen, und dass ausgehend von der Schulterblockreihe die Pitchfolge derart abgestimmt ist, dass an keiner Stelle mehr als zwei Pitches übereinstimmender Länge unmittelbar aufeinander folgen.

Durch eine erfindungsgemäße Ausgestaltung wird erreicht, dass in der Schulterblockreihe die geräuschintensiveren Quernuten ihre Impulse entsprechend der optimierten Pitchfolge gut im abgestrahlten Frequenzspektrum verteilen können. Hier kann die Pitchfolge auch leicht derart optimiert werden, dass die Bedingung, dass maximal zwei gleich lange Pitches unmittelbar aufeinander folgen dürfen, erfüllt ist. Auf die mittlere Blockreihe überträgt sich diese Bedingung derart, dass dort das Verhältnis der größten Blocklänge (einschließlich der halben Breiten der jeweils unmittelbar benachbarten Quernuten) zur kleinsten Blocklänge kleiner ist, als das Verhältnis der Länge des längsten Pitches zur Länge des kürzestens Pitches, wobei letztere Längen jeweils an der Schulterblockreihe vorliegen. In der mittleren Blockreihe stellt sich daher ein gleichmäßigeres Abriebsbild ein. Dies erhöht in Summe den Abrollkomfort des Reifens und vermindert gegenüber den bekannten Ausführungen das Abrollgeräusch.

Eine besonders gute Abstimmung von Geräusch- und Abrollkomfort wird bei jenen Profilen erzielt, wo die Anzahl der Blöcke in der Schulterblockreihe das Zwei- oder Dreifache der Anzahl der Blöcke in der mittleren Blockreihe beträgt.

Es ist ferner günstig, darauf zu achten, dass die Längenverhältnisse der Pitches untereinander nicht zu groß sind. So ist es insbesondere von Vorteil, wenn das Verhältnis der Länge des längsten Pitch zum Verhältnis der Länge des kürzesten Pitch zwischen 1,3 und 1,6, insbesondere 1,4, beträgt.

Was die Pitchfolge betrifft, ist es günstig, wenn sich diese insbesondere aus zwei bis fünf Pitches unterschiedlicher Länge zusammensetzt.

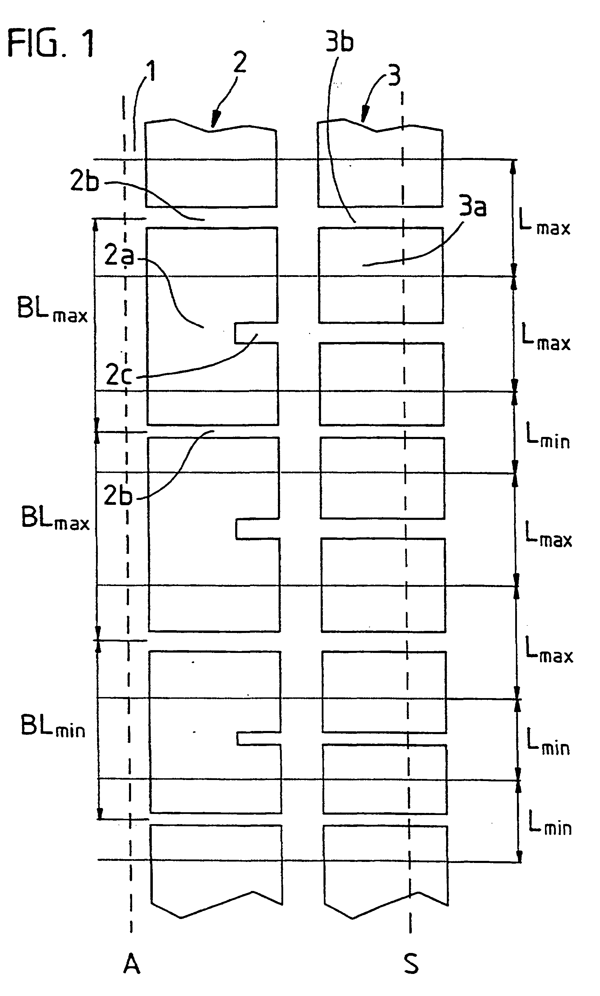

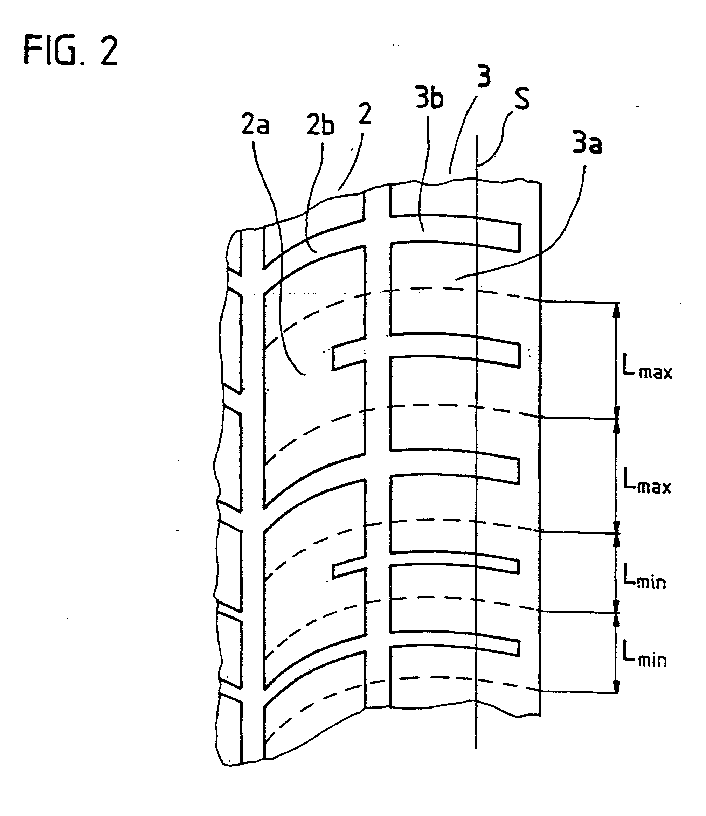

Weitere Merkmale, Vorteile und Einzelheiten der Erfindung werden nun anhand der Zeichnung, die ein Ausführungsbeispiel darstellt, näher beschrieben. Die beiden Zeichnungsfiguren sind schematische Darstellungen und zeigen Draufsichten auf Hälften von Teilabwicklungen von Laufstreifen, wobei Fig. 1 das Grundprinzip der gegenständlichen Erfindung und Fig. 2 eine grundsätzliche und vereinfachte Ausgestaltung eines erfindungsgemäß ausgeführten Laufstreifenprofiles zeigen.

Bei den in Fig. 1 und Fig. 2 beispielhaft und schematisch dargestellten Ausführungen eines Laufstreifenprofiles handelt es sich um Profile für PKW - Reifen, insbesondere Radialreifen, und vom Typ her um solche, wo entlang der Äquatorlinie A-A eine breite Umfangsnut 1, im Laufstreifenmittelbereich zwei Blockreihen 2 und in den Schulterbereichen je eine weitere Blockreihe 3 angeordnet ist. Die Blockreihen 3 sind von den Blockreihen 2 jeweils durch eine weitere breite Umfangsnut 1 getrennt. Die Blöcke 2a der Blockreihen 2 sind als "Doppelblöcke" ausgebildet, das heißt, dass ihre Gesamtanzahl über den Laufstreifenumfang nur halb so groß ist, wie die Gesamtzahl der Schulterblöcke 3a. Solche grundsätzlichen Ausgestaltungen für Laufstreifenprofile sind an sich bekannt und werden aus dem Grund getroffen, um die Profilsteifigkeit im Laufstreifenmittelbereich gegenüber der Schulter etwas zu erhöhen, was vor allem positive Auswirkungen auf das Fahrverhalten des Reifens zeigt.

Die weitere Ausgestaltung des in Fig. 1 gezeigten Profiles umfasst Quernuten 2b und 3b, die die Blöcke 2a und 3a in Umfangsrichtung voneinander trennen, wobei die Quernuten 2b und 3b, dort wo Quernuten 2b vorgesehen sind, miteinander fluchtend verlaufen. Jeder Block 2a ist ferner mit kurzen Sacknuten 2c versehen, die mit den verbleibenden Quernuten 3b fluchtend angeordnet sind. Die strichlierte Linie S-S versinnbildlicht die größte Breite des Laufstreifens in der Bodenaufstandsfläche, demnach die sogenannte Latschbreite.

Die dargestellte und beschriebene fluchtende Anordnung dient dabei lediglich dem leichteren Verständnis der gegenständlichen Erfindung. Abweichend davon ist die bei Laufstreifenprofilen durchaus übliche Ausgestaltung denkbar, unter Beibehaltung der Pitchfolge die Pitchgrenzen, wie weiter unten beschrieben, in den beiden Blockreihen in eine der Umfangsrichtungen zu versetzen, wodurch die fluchtende Anordnung nicht mehr gegeben ist.

Das in Fig. 2 dargestellte Laufstreifenprofil ist von seinem grundsätzlichen Aufbau wie jenes gemäß Fig. 1 gestaltet, mit dem Unterschied, dass, wie es der tatsächlichen Ausgestaltung mehr entsprechen würde, die Quernuten 2b, 3b zur Profilquerrichtung unter einem Winket veflaufen und die Quemuten 2b gleichzeitig bogenförmig gekrümmt sind. Die zweite, nicht dargestellte Hälfte des Laufstreifenprofiles kann nun so ausgestaltet sein, dass sie durch Spiegelung und bevorzugt auch gleichzeitiges Verschieben der dargestellten Laufstreifenhälfte in Umfangsrichtung entsteht. Damit würde ein laufrichtungsgebundenes Profil vorliegen. Die Ausgestaltung kann jedoch auch so getroffen werden, dass sich das Laufstreifenprofil in der zweiten Hälfte so fortsetzt, dass sich ein Laufstreifenprofil mit etwa S-förmig geschwungenen und von Laufstreifenrand zu Laufstreifenrand durchgehenden Quernuten ergibt. Die tatsächliche Ausgestaltung des Laufstreifenprofiles ist jedoch für die gegenständliche Erfindung nur insofern von Bedeutung, als dass im Mittelbereich des Laufstreifens zumindest eine Blockreihe mit in Umfangsrichtung relativ langen Blöcken und in zumindest einer der Schultern eine Schulterblockreihe vorzunehmen ist, wobei die Anzahl der Blöcke in der Schulterblockreihe das Zwei- oder auch Dreifache der Anzahl der Blöcke in der mittleren Blockreihe beträgt.

Wie insbesondere aus der schematischen Darstellung in Fig. 1 ersichtlich ist, setzt sich das Profil bzw. setzen sich die dargestellten Profilstrukturen aus in Umfangsrichtung aneinander gereihten bzw. aufeinander folgenden Profilschritten, die üblicherweise Pitches genannt werden, zusammen. Dieses Zusammensetzen eines Profiles oder von Umfangsteilen desselben aus Profilschritten bzw. Pitches ist seit längerem üblich und dient dem Zweck, das Reifen/Fahrbahngeräusch zu minimieren, beispielsweise die beim Abrollen des Reifens entstehenden hörbaren Frequenzen so zu verteilen bzw. entstehen zu lassen, dass sie möglichst wenig störend wirken. Dazu werden Pitches in unterschiedlichen Längen vorgesehen, beispielsweise setzen sich üblicherweise Laufstreifenprofile für PKW - Reifen aus Abfolgen, Pitchfolgen genannt, mit zwei bis fünf Pitches unterschiedlicher Länge zusammen, deren günstigste Anordnung über den Reifenumfang, die Pitchfolge, durch ein Rechenprogramm ermittelt wird.

Beim dargestellten Ausführungsbeispiel sind sowohl in Fig. 1 als auch Fig. 2 Ausschnite auf die hier angewendete Pitchfolge dargestellt, die übrigens nicht Gegenstand der vorliegenden Erfindung ist. Der dargestellte Abschnitt besitzt nur Pitches mit der größten Länge. $L_{max}$ bezeichnet, und solche mit der kleinsten Länge, $L_{min}$ bezeichnet. An anderer Stelle können in der Pitchfolge Pitches mit dazwischen liegenden Längen vorgesehen werden. Das Verhältnis der Länge $L_{max}$ des längsten Pitch zur Länge $L_{min}$ des kürzesten Pitch beträgt hier 1,4 und sollte in einem Bereich von ca. 1,3 bis ca. 1,6 liegen. Dies ist für erfindungsgemäß ausgelegte Laufstreifenprofile günstig, insbesondere um, wie noch erläutert wird, das Längenverhältnis in der mittleren Blockreihe nicht zu groß zu machen. Die Pitchgrenzen verlaufen, wie es sich ebenfalls aus den Zeichnungsfiguren ergibt, jeweils durch die Blöcke 2a und 3a. Jeder Pitch schließt eine Quernut 3a mit ein, deren Breite, wie dargestellt, im Pitch mit der Länge $L_{min}$ kleiner ist als im Pitch mit der Länge $L_{max}$. Dies sind übliche Maßnahmen.

Wesentlich an der gegenständlichen Erfindung ist nun, daß die Pitchfolge, wie sie bei der Schulterblockreihe vorliegt, so gestaltet wird, dass jeweils höchstens zwei gleich lange Pitches, also beispielsweise höchstens zwei Pitches der Länge $L_{max}$, unmittelbar aufeinander folgen. Ansonsten kann die Pitchfolge nach den üblichen Kriterien optimiert werden.

Diese Beschränkung darauf, dass maximal zwei gleich lange Pitches unmittelbar aufeinander folgen dürfen, hat zur Folge, daß den "Doppelblöcken" 2a in den mittleren Blockreihen 2 bestimmte Längenverhältnisse verliehen werden. Insbesondere ist das Verhältnis der Längenabmessung $BL_{max}$, welches die Umfangslänge des längsten Blockes 2a plus jeweils der Hälfte der beiden benachbarten Quernuten 2b ist, zur Längenabmessung $BL_{min}$, welches gleichermaßen für den kürzesten Block 2a ermittelt wird, kleiner als das Verhältnis $L_{max}$ zu $L_{min}$. Eine optimale Einstellung dieses Längenverhältnisses ergibt sich dann, wenn bei einer Pitchfolge mit mehr als zwei unterschiedlichen Pitchlängen, 7 höchstens zwei Pitches der größten Länge und höchstens zwei Pitches der kleinsten Länge aufeinander folgen.

Das Verhältnis der Längen von $BL_{max}$ zu $BL_{min}$ in der mittleren Blockreihe 2 ergibt sich entsprechend der Formel

$$\frac{L_{max} + (L_{max} + L_{min})/2}{L_{min} + (L_{max} + L_{min})/2}$$

Wird das Laufstreifenprofil so ausgelegt, dass einem Profilblock 2a in der mittleren Blockreihe 2 drei Profilblöcke 3a in der Schulterblockreihe entsprechen, so gilt die genannte Bedingung, dass in der Pitchfolge maximal zwei gleich lange Pitches aufeinander folgen dürfen, gleichermaßen. In diesem Fall ergibt sich das analog zu oben in der mittleren Blockreihe entstehende Verhältnis aus

$$\frac{2 \cdot L_{max} + (L_{max} + L_{min})/2}{2 \cdot L_{min} + (L_{max} + L_{min})/2}$$

Generell stellt sich somit bei nach der der gegenständlichen Erfindung gestalteten Laufstreifenprofilen in der betreffenden mittleren Blockreihe ein Längenverhältnis, wie erläutert, ein, welches einem ungleichmäßigen Abrieb durch zu große unterschiedliche Steifigkeitsverhältnisse entgegenwirkt. Bei der erfindungsgemäßen Auslegung ist auch von Vorteil, dass in den Schulterblockreihen die geräuschintensiveren Quernuten ihre Impulse entsprechend der optimierten Pitchfolge gut im abgestrahlten Frequenzspektrum verteilen können und in der Mitte die weniger schallabstrahlend wirkenden Blöcke ein gleichförmigeres Abriebsbild erhalten und in Summe damit der Geräusch- und der Abrollkomfort des Laufstreifenprofiles erhöht wird.

Erwähnt sei, dass die gegenständliche Erfindung bei einer großen Anzahl von Laufstreifenprofilen anwendbar ist, wobei diese auch bezüglich der Äquatorlinie asymmetrisch gestaltet sein können oder Umfangsbereiche besitzen können, die sehr unterschiedlich strukturiert sein können.

**Patentansprüche**

1. Fahrzeugluftreifen, insbesondere Radialreifen für Personenkraftwagen, mit einem Laufstreifenprofil, welches sich aus Profilelementen zusammensetzt, die zumindest eine Schulterblockreihe (3) und eine dieser benachbart verlaufende mittlere Blockreihe (2) umfassen, deren Blöcke (2a, 3a) in Umfangsrichtung durch Quernuten (2b, 3b) voneinander getrennt sind, wobei die über den Reifenumfang vorliegende Gesamtanzahl der Blöcke (3a) der Schulterblockreihe (3) ein ganzzahliges Vielfaches der Gesamtanzahl der in der benachbarten mittleren Blockreihe (2) verlaufenden Blöcke (2a) ist, wobei zumindest die Schulterblockreihe (3) und die mittlere Blockreihe (2) gemäß einer Pitchfolge geräuschoptimiert sind, die mindestens zwei Pitches unterschiedlicher Länge ($L_{max}$, $L_{min}$) umfasst und von der Schulterblockreihe (3) ausgehend angewandt ist, wobei jedes Pitch in der Schulterblockreihe einen Block (3a) und eine Quernut (3b) umfasst, **dadurch gekennzeichnet, dass** die Pitchgrenzen durch die Blöcke (2a, 3a) der Blockreihen (2, 3) verlaufen, und dass ausgehend von der Schulterblockreihe (3) die Pitchfolge derart abgestimmt ist, dass an keiner Stelle mehr als zwei Pitches übereinstimmender Länge ($L_{max}$, $L_{min}$) unmittelbar aufeinander folgen.

2. Fahrzeugluftreifen nach Anspruch 1, **dadurch gekennzeichnet, dass** die Anzahl der Blöcke (3a) in der Schulterblockreihe (3) das Zwei- oder Dreifache der Anzahl der Blöcke (2a) in der mittleren Blockreihe (2) beträgt.

3. Fahrzeugluftreifen nach Anspruch 1 oder Anspruch 2, **dadurch gekennzeichnet, dass** das Verhältnis der Länge ($L_{max}$) des längsten Pitch zum Verhältnis der Länge ($L_{min}$) des kürzesten Pitch zwischen 1,3 und 1,6, insbesondere 1,4, beträgt.

4. Fahrzeugluftreifen nach einem der Ansprüche 1 bis 3, **dadurch gekennzeichnet, dass** die Pitchfolge aus 2 bis 5 Pitches unterschiedlicher Länge zusammengesetzt ist.

5. Fahrzeugluftreifen nach einem der Ansprüche 1 bis 4, **dadurch gekennzeichnet, dass** die Pitchfolge mindestens drei Pitches unterschiedlicher Längen umfasst..

**Claims**

1. Vehicle pneumatic tyre, in particular a radial tyre for passenger cars, having a tread pattern composed of pattern elements which comprise at least one shoulder block row (3) and a central block row (2) running adjacent thereto, the blocks (2a, 3a) of which are separated from one another in a circumferential direction by transverse grooves (2b, 3b), the total number of blocks (3a) in the shoulder block row (3) over the tyre circumference being a whole multiple of the total number of blocks (2a) running in the adjacent central block row (2), at least the shoulder block row (3) and the central block row (2) being noise-tuned according to a pitch sequence which comprises at least two pitches of different length ($L_{max}$, $L_{min}$) and which is applied starting from the shoulder block row (3), each pitch in the shoulder block row encompassing one block (3a) and one transverse groove (3b), **characterized in that** the pitch boundaries run through the blocks (2a, 3a) of the block rows (2, 3), and that, starting from the shoulder block row (3), the pitch sequence is tuned in such a way that, at no point, do more than two pitches of matching length ($L_{max}$, $L_{min}$) immediately succeed one another.

2. Vehicle pneumatic tyre according to Claim 1, **characterized in that** the number of blocks (3a) in the shoulder block row (3) is twice or three time the number of blocks (2a) in the central block row (2).

3. Vehicle pneumatic tyre according to Claim 1 or Claim 2, **characterized in that** the ratio of the length ($L_{max}$) of the longest pitch to the length ($L_{min}$) of the shortest pitch is between 1.3 and 1.6, in particular 1.4.

4. Vehicle pneumatic tyre according to any one of Claims 1 to 3, **characterized in that** the pitch sequence is composed of 2 to 5 pitches of different length.

5. Vehicle pneumatic tyre according to any one of Claims 1 to 4, **characterized in that** the pitch sequence comprises at least three pitches of different lengths.

**Revendications**

1. Bandage pneumatique pour véhicule, notamment pneu radial pour véhicules automobiles de tourisme, comprenant un profil de bande de roulement qui se compose d'éléments profilés qui comprennent au moins une rangée de blocs d'épaulement (3) et une rangée de blocs (2) centrale s'étendant à côté de celle-ci, dont les blocs (2a, 3a) sont séparés les uns des autres dans la direction périphérique par des rainures transversales (2b, 3b), le nombre total des blocs (3a) de la rangée de blocs d'épaulement (3) se trouvant sur la périphérie du pneu étant un multiple entier du nombre total des blocs (2a) s'étendant dans la rangée de blocs (2) centrale voisine, au moins la rangée de blocs d'épaulement (3) et la rangée de blocs centrale (2) étant optimisées en termes de bruit suivant une série de pas, qui comprend au moins deux pas de longueurs différentes ($L_{max}$, $L_{min}$) et est appliquée à partir de la rangée de blocs d'épaulement (3), chaque pas dans la rangée de blocs d'épaulement comprenant un bloc (3a) et une rainure transversale (3b), **caractérisé en ce que** les limites des pas s'étendent à travers les blocs (2a, 3a) des rangées de blocs (2, 3), et **en ce qu'**à partir de la rangée de blocs d'épaulement (3), la série de pas est adaptée de telle sorte que pas plus de deux pas de longueurs identiques ($L_{max}$, $L_{min}$) ne se suivent les uns les autres directement en aucun endroit.

2. Bandage pneumatique pour véhicule selon la revendication 1, **caractérisé en ce que** le nombre des blocs (3a) dans la rangée de blocs d'épaulement (3) est le double ou le triple du nombre de blocs (2a) dans la rangée de blocs centrale (2).

3. Bandage pneumatique pour véhicule selon la revendication 1 ou 2, **caractérisé en ce que** le rapport de la longueur ($L_{max}$) du pas le plus long à la longueur ($L_{min}$) du pas le plus court est compris entre 1,3 et 1,6, notamment vaut 1,4.

4. Bandage pneumatique pour véhicule selon l'une quelconque des revendications 1 à 3, **caractérisé en ce que** la série de pas est constituée de 2 à 5 pas de longueurs différentes.

**5.** Bandage pneumatique pour véhicule selon l'une quelconque des revendications 1 à 4, **caractérisé en ce que** la série de pas comprend au moins trois pas de longueurs différentes.

## FIG. 1

FIG. 2